Europäisches Patentamt

European Patent Office

Office européen des brevets

(19)

(11) **EP 1 349 779 B1**

(12) **FASCICULE DE BREVET EUROPEEN**

(45) Date de publication et mention
de la délivrance du brevet:
**11.08.2004 Bulletin 2004/33**

(21) Numéro de dépôt: **01270460.7**

(22) Date de dépôt: **11.12.2001**

(51) Int Cl.⁷: **B64C 25/42**

(86) Numéro de dépôt international:
**PCT/FR2001/003923**

(87) Numéro de publication internationale:
**WO 2002/047977 (20.06.2002 Gazette 2002/25)**

(54) **PROCEDE ET DISPOSITIF DE COMMANDE AUTOMATIQUE DE LA DECELERATION D'UN AERONEF EN PHASE DE ROULEMENT**

**VERFAHREN UND VORRICHTUNG ZUR AUTOMATISCHEN STEUERUNG EINER FLUGZEUGVERZÖGERUNG WÄHREND DER ROLLPHASE**

**METHOD AND DEVICE FOR AUTOMATIC CONTROL OF AN AIRCRAFT DECELERATION IN RUNNING PHASE**

(84) Etats contractants désignés:
**DE GB**

(30) Priorité: **12.12.2000 FR 0016147**

(43) Date de publication de la demande:
**08.10.2003 Bulletin 2003/41**

(73) Titulaire: **AIRBUS France**
**31060 Toulouse Cedex 03 (FR)**

(72) Inventeur: **VILLAUME, Fabrice**
**F-31000 Toulouse (FR)**

(74) Mandataire: **Poulin, Gérard et al**
**BREVALEX**
**3, rue du Docteur Lancereaux**
**75008 Paris (FR)**

(56) Documents cités:
**EP-A- 0 025 614      EP-A- 0 505 236**
**EP-A- 0 895 929**

## Description

### Domaine technique

La présente invention concerne un procédé et un dispositif de commande automatique de la décélération d'un aéronef en phase de roulement.

On distingue généralement, lors de l'atterrissage d'un aéronef, trois étapes qui sont : une phase d'approche, l'impact, et une phase de roulage de l'aéronef sur une piste d'atterrissage. La phase de roulage est mise à profit pour décélérer l'aéronef, de façon à lui permettre de s'engager dans une bretelle de sortie de la piste d'atterrissage et donc de libérer cette dernière.

En raison de l'encombrement chronique des aéroports, et des coûts liés à l'utilisation des pistes d'atterrissage, des efforts sont concentrés sur la réduction du temps de leur occupation par les appareils.

### Etat de la technique antérieure

A l'heure actuelle, nombre d'avions de transport gros porteurs sont équipés d'un système de freinage automatique qui permet d'établir une consigne de décélération prédéterminée. Généralement trois ou cinq niveaux de freinage sont prévus. Ces niveaux sont par exemple "faible" (low) , "moyen" (med) et "fort" (high). Le niveau de freinage fort n'est pas utilisé dans des conditions normales, mais seulement en cas de freinage d'urgence. Les niveaux de freinage sont préétablis et ne tiennent compte ni de l'état et de la configuration de la piste, ni des conditions météorologiques.

La mise en oeuvre de consignes prédéterminées de freinage ne permet pas d'optimiser le temps d'occupation de la piste à l'atterrissage.

On connaît également, par le document EP-A-0 895 929, un système de freinage automatique perfectionné qui tient compte de la distance séparant le point d'impact de l'aéronef sur la piste et la position d'arrêt ou de sortie. Il tient également compte d'une vitesse actuelle de l'aéronef et de sa vitesse finale (qui peut être nulle). Selon ce document on applique à l'aéronef une décélération donnée par la formule suivante :

$$\left| \frac{V_{final}^2 - V^2}{2L} \right| \qquad (1)$$

Dans cette expression, $V_{final}$, V et L désignent respectivement la vitesse finale de l'aéronef en bout de piste, la vitesse actuelle de l'aéronef et la distance qui sépare la position finale d'une position actuelle de l'aéronef.

Une description plus détaillée du calcul de la décélération donnée par la formule (1) peut être trouvée dans le document référencé ci-dessus.

Le système de freinage automatique permet, au moins dans un certain nombre de cas, de réduire le temps d'occupation de la piste d'atterrissage comparativement aux systèmes à niveaux de freinage constants et prédéterminés.

Un autre système de freinage automatique est connu de EP-A-0 025 614, qui montre toutes les caractéristiques du préambule des revendications indépendantes 1 (dispositif) et 8 (Procédé).

La présente invention a pour but de proposer un procédé et un dispositif de commande de décélération permettent d'optimiser encore davantage le freinage et de réduire encore davantage le temps d'occupation d'une piste d'atterrissage.

Un but est également de proposer un tel procédé et un tel dispositif capables d'être installés ou être mis en oeuvre sur des aéronefs qui n'en étaient pas initialement équipés.

### Exposé de l'invention

Pour atteindre ces buts, l'invention a plus précisément pour objet un dispositif de commande de la décélération d'un aéronef en phase de roulement sur une piste d'atterrissage, le dispositif présentant :

- des moyens de saisie d'une position actuelle (instantanée) de l'aéronef sur la piste,
- des moyens de saisie d'une vitesse actuelle (instantanée) de l'aéronef sur la piste,
- des moyens de calcul, recevant des valeurs de position et de vitesse en provenance des moyens de saisie, pour établir, en fonction d'une vitesse finale souhaitée de l'aéronef en une position dite finale sur la piste, un instant de modification de la consigne de décélération, postérieur à un instant actuel, et une nouvelle consigne de décélération à appliquer à partir de l'instant de modification, pour atteindre la position finale à la vitesse souhaitée.

La position finale considérée ci-dessus est, par exemple, la position d'une bretelle de sortie de la piste d'atterrissage. L'aéronef doit atteindre cette position avec une vitesse finale suffisamment faible pour quitter la piste en toute sécurité. La valeur souhaitée de la vitesse finale, de même que la position finale, sont des données qu'il est possible de déterminer a priori et d'enregistrer dans une mémoire des moyens de calcul, par exemple.

Comme l'instant de modification de la valeur de décélération est postérieure à l'instant dit actuel, l'aéronef parcourt une certaine distance avant l'application de la nouvelle consigne de décélération.

Au moment de l'impact, c'est à dire lorsque l'instant actuel coïncide avec l'entrée en contact du train d'atterrissage avec la piste, aucune consigne de décélération de la phase de roulage n'est appliquée à l'aéronef. Eventuellement, une consigne de décélération faible et prédéterminée peut être appliquée. L'aéronef ne subit donc, dans un premier temps, qu'une décélération faible correspondant au freinage aérodynamique ou un à un éventuel freinage de consigne prédéterminé. Il parcourt ainsi une première portion de la piste d'atterrissage avec une vitesse élevée, au moins jusqu'à l'instant de modification de la consigne de décélération. A partir de cet instant, les moyens de freinage sont véritablement sollicités. De façon précise, les moyens de freinage sont sollicités dans la mesure nécessaire pour atteindre une vitesse souhaitée au point final fixé. En retardant l'instant de modification de la consigne de décélération, il est possible de parcourir une plus grande portion de la piste à plus vive allure et donc de réduire la temps d'occupation de la piste. La décélération de l'aéronef est d'autant plus forte que le ou les instants de modification de la consigne de décélération sont espacés de l'instant d'impact.

Dans une réalisation particulière de l'invention, les moyens de calcul peuvent être équipés d'un calculateur du type à réseau de neurones, capable, dans une phase d'apprentissage, de trouver un équilibre entre une réduction optimale du temps de roulage et les exigences de sécurité et de confort des passagers de l'aéronef.

On entend par moyens de freinage de l'aéronef tout équipement destiné à décélérer l'aéronef lors de la phase de roulage. Ceux-ci peuvent comporter des freins à disques agissant sur les roues du train d'atterrissage ou éventuellement des dispositifs dits d'inversion de poussée des propulseurs. Les moyens de freinage peuvent encore comporter d'autres dispositifs de freinage aérodynamique tels que des « ground spoiler » (aérofreins) ou un parachute de queue.

La valeur de la décélération qu'il convient d'appliquer à l'aéronef à partir de l'instant de modification de la consigne, peut être obtenue, par exemple, selon une loi comparable à celle donnée par l'équation (1). Toutefois, dans cette équation V, n'est alors plus la vitesse actuelle de l'aéronef, mais la vitesse estimée à l'instant de modification de la consigne, et L n'est plus la distance séparant la position actuelle de la position finale mais la distance séparant la position estimée à l'instant de modification de consigne et la position finale.

Selon un aspect particulier de l'invention, le dispositif de commande peut comporter des moyens de saisie continue de la position actuelle et de la vitesse actuelle de l'aéronef, et des moyens de calcul continu de nouvelles consignes de décélération.

Grâce au calcul continu de nouvelles consignes de décélération et éventuellement de nouveaux instants de modification de consigne, il est possible, postérieurement au premier instant de modification de la consigne, de corriger la décélération ou de l'affiner de façon à atteindre la position finale avec une vitesse correspondant le plus précisément possible à la vitesse souhaitée, indépendamment des conditions météorologiques et indépendamment de l'état de la piste d'atterrissage.

Selon un autre aspect particulier de l'invention, les moyens de saisie de la position actuelle peuvent comporter un système de positionnement du type GPS (global positioning system, système de localisation par satellites). Par ailleurs, les moyens de saisie de la vitesse actuelle peuvent comporter un système de mesure de vitesse propre de l'aéronef du type IRS (internal reference system, système référentiel interne).

L'invention concerne également un équipement de freinage pour un aéronef susceptible d'atterrir sur une piste d'atterrissage et pourvu d'un dispositif de commande de la décélération tel que décrit ci-dessus.

L'équipement peut comporter en outre un dispositif anti-patinage connecté entre le dispositif de commande de la décélération et les freins agissant sur les roues de l'aéronef, pour éviter un éventuel blocage des roues.

Enfin, l'invention concerne un procédé de commande de la décélération d'un aéronef engagé sur une piste d'atterrissage, entre au moins une position actuelle de l'aéronef occupée à un instant actuel, à laquelle celui-ci présente une vitesse actuelle, et une position finale à laquelle l'aéronef doit présenter une vitesse finale déterminée, dans lequel on détermine en fonction de la position actuelle, de la vitesse actuelle et de la vitesse finale, un instant de modification d'une consigne de décélération, postérieur à l'instant actuel, et une nouvelle consigne de décélération appliquée à partir dudit instant de modification de la consigne, pour atteindre la position finale avec la vitesse déterminée. La position finale est, par exemple, une bretelle de sortie de la piste d'atterrissage.

D'autres caractéristiques et avantages de l'invention ressortiront de la description qui va suivre, en référence aux figures des dessins annexés. Cette description est donnée à titre purement illustratif et non limitatif.

**Brève description des figures**

La figure 1 est une représentation schématique d'une piste d'atterrissage indiquant les principaux paramètres pris en compte pour le calcul de la décélération d'un aéronef conformément à l'invention.

La figure 2 est un graphique indiquant en fonction du temps, mesuré à partir de l'impact d'un aéronef sur la piste, l'évolution d'une consigne de décélération appliquée à un système de freinage de l'aéronef conformément à l'invention.

La figure 3 est un graphique indiquant l'évolution de la vitesse de l'aéronef sur la piste d'atterrissage, en fonction du temps, compte tenu de la consigne de décélération de la figure 2.

La figure 4, est une représentation schématique d'un équipement de freinage indiquant les principaux éléments d'un dispositif de commande de décélération conforme à l'invention.

**Description détaillée de modes de mise en oeuvre de l'invention.**

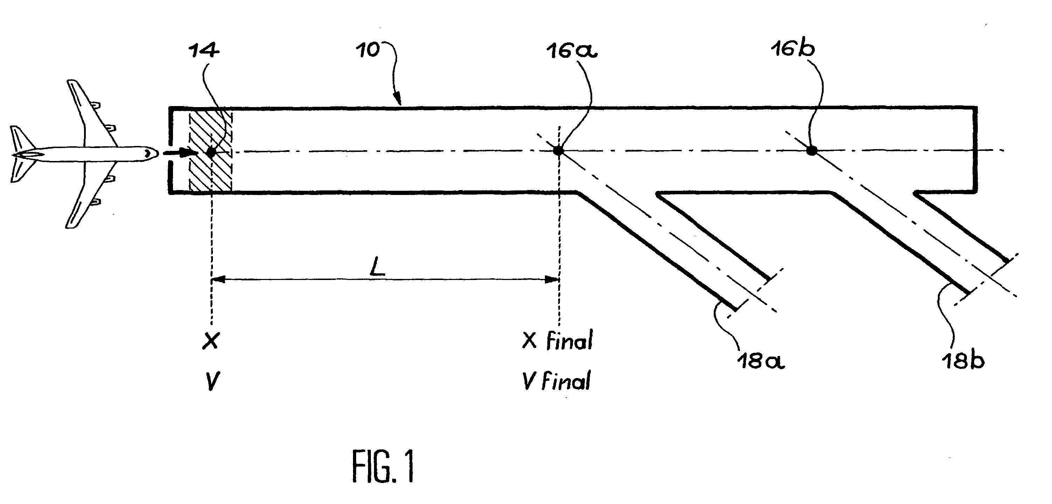

La figure 1 représente schématiquement une piste d'atterrissage 10 qu'un aéronef aborde dans le sens indiqué par une flèche après une phase d'approche.

La décélération de l'aéronef lors de la phase d'approche ne fait pas l'objet de l'invention. Le procédé de commande de la décélération de l'aéronef, conforme à l'invention, concerne la phase de roulage qui se déroule sur la piste 10 depuis un point d'impact 14 dans une zone d'impact, jusqu'à un point 16a ou 16b à partir duquel l'aéronef commence à quitter la piste 10.

Dans l'exemple de la figure, la piste présente deux bretelles de sortie 18a et 18b qu'un aéronef peut emprunter en déviant sa trajectoire respectivement à partir des points 16a et 16b. Ces points sont désignés plus simplement par "points de sortie" dans la suite du texte.

Le choix d'emprunter la première ou la deuxième bretelle de sortie dépend essentiellement du type d'aéronef, et éventuellement des conditions de l'atterrissage. On considérera que la première sortie 18a est empruntée.

L'aéronef atteint le point d'impact 14 de coordonnée linéaire X avec une vitesse V. Sa décélération doit être suffisamment forte pour que sa vitesse finale au point de sortie 16a ait une valeur prédéterminée $V_{final}$, adaptée à l'inflexion de sa trajectoire dans la bretelle de sortie 18a. Pour passer de la vitesse initiale à la vitesse finale la longueur L du trajet de roulement est $L = X_{final} - X$ où $X_{final}$ est la coordonnée linéaire du point de sortie.

Les coordonnées de position et de vitesse d'impact (X, V) sont saisies par des équipements, embarqués ou non, connus en soi. Il s'agit, par exemple d'équipements du type GPS (système de localisation par satellites), IRS (système de référence à centrale inertielle), accéléromètres, télémètres etc. Il convient de préciser que les paramètres X et V de position et de vitesse d'impact peuvent être des paramètres objectifs effectivement mesurés à l'instant d'impact, mais peuvent également être des paramètres estimés établis à partir de la vitesse, de la position et éventuellement de la décélération de l'aéronef avant l'impact sur la piste, ou éventuellement après l'impact.

La position et la vitesse de l'aéronef à l'impact peuvent constituer la position "actuelle" et la vitesse "actuelle" au sens de l'invention, pour établir la consigne de décélération. Sur ce point également, il convient de préciser qu'une position occupée par l'aéronef et une vitesse de l'aéronef, postérieures à celles de l'impact, peuvent aussi convenir pour l'établissement d'une première consigne de décélération.

Comme indiqué précédemment, on détermine à partir des paramètres X et V, et plus précisément à partir des paramètres $X_{final} - X$ et $V_{final} - V$, une consigne de décélération.

Conformément à l'invention, la consigne de décélération n'est pas appliquée immédiatement mais après un certain temps.

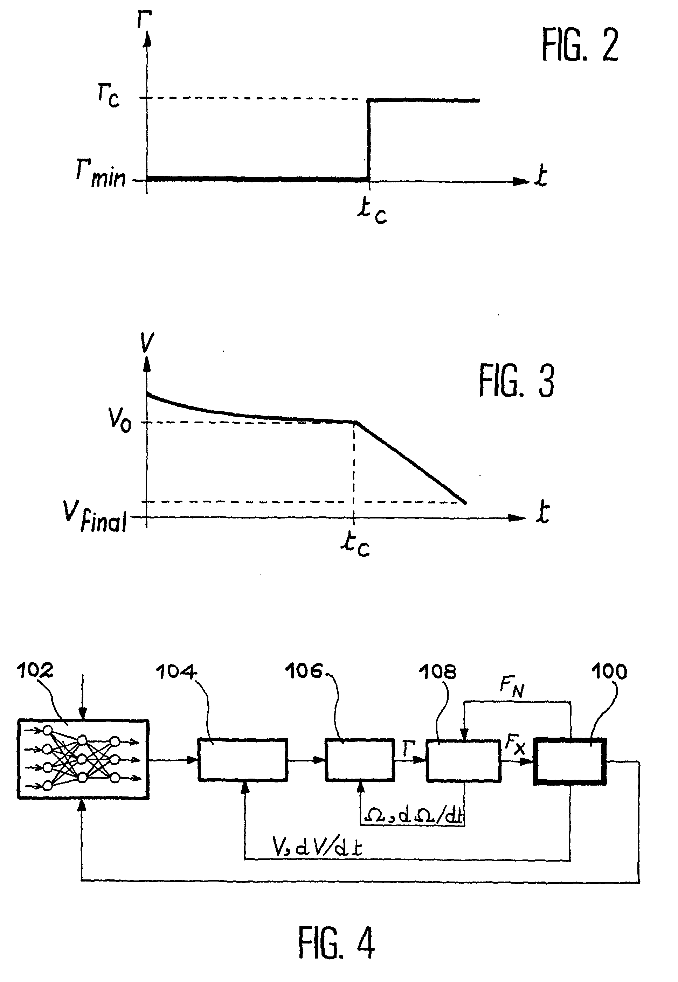

La figure 2, montre la forme de l'évolution de la consigne de décélération qui serait obtenue en appliquant une seule fois le procédé de l'invention après qu'un aéronef ait touché la piste d'atterrissage.

L'axe des ordonnées indique la consigne de décélération Γ, qui correspond, par exemple, à un couple de freinage appliqué aux roues du train d'atterrissage. Par ailleurs, l'axe des ordonnées coïncide avec une origine des temps, prise, par exemple, à l'impact de l'aéronef sur la piste.

Dans un premier temps, un couple de freinage minimum, noté $Γ_{min}$ est appliqué aux roues. $Γ_{min}$ peut être selon le cas une valeur de consigne faible, éventuellement nulle, ou, dans le cas d'une mise en oeuvre itérative du procédé, une valeur correspondant à une consigne de décélération précédemment établie.

Après un temps de retard, à un instant $t_c$ la consigne de décélération est modifiée. Un nouveau couple de freinage $Γ_c$ est appliqué aux roues. La valeur $Γ_c$ est établie en fonction des paramètres de position et de vitesse préalablement saisis, de façon que la vitesse finale souhaitée puisse être atteinte à la hauteur du point de sortie 16a de la piste d'atterrissage.

Le calcul de la décélération nécessaire peut avoir lieu, par exemple, à partir d'équations du mouvement de la forme générale suivante :

$$V_{final} = a.t + V, \text{ et}$$

$$X_{final} = X + V.t + a/2 .t^2$$

Dans ces équations a représente la décélération et t le temps. Selon le cas, le temps doit être compté à partir de la modification de la consigne de décélération, en prenant en compte éventuellement une décélération précédant l'instant de modification de la consigne.

Selon des modèles plus complexes, le calcul de la décélération peut prendre en compte d'autres paramètres tels que des coefficients de frottements caractéristiques de l'état de surface de la piste d'atterrissage, la portance etc.

Enfin, selon une autre possibilité encore, qui sera évoquée plus en détail dans la suite du texte, le temps de retard et la consigne de décélération peuvent être établis par un calculateur à réseau de neurones prenant en compte un apprentissage préalable de paramètres.

La figure 2 correspond à un exemple de mise en oeuvre particulièrement simplifiée de l'invention dans laquelle seulement deux consignes de décélération $Γ_{min}$ et $Γ_c$ sont considérées. Comme cela ressortira également dans la suite de la description, une mise en oeuvre itérative ou continue du procédé permet de réajuster plusieurs fois, voire continûment la consigne de décélération.

La figure 3 montre, sous forme de graphique, l'évolution de la vitesse d'un aéronef se posant sur la piste d'atterrissage et auquel on applique les consignes de décélération de la figure 2. L'axe des ordonnées qui indique la vitesse V en fonction du temps, coïncide également avec l'instant d'impact, dans l'exemple décrit.

On constate qu'entre l'instant d'impact et l'instant $t_c$ de modification de la consigne de décélération, la vitesse ne diminue que lentement.

En effet, jusqu'à l'instant $t_c$, l'aéronef n'est soumis qu'à un freinage aérodynamique et tout au plus à un très faible freinage aux roues.

En revanche, à partir de l'instant tc, l'aéronef subit une décélération a due au couple de freinage $\Gamma_c$.

En désignant par $V_o$ la vitesse de l'aéronef à l'instant $t_c$, celle-ci va décroître sensiblement selon l'équation mentionnée précédemment, soit plus précisément :

$$V = V_o - a.(t-t_c).$$

La consigne de freinage est telle que la vitesse finale $V_{final}$ soit atteinte à la hauteur de la bretelle de sortie de la piste.

On comprend sur la figure 3 que, plus l'instant $t_c$ est tardif, plus le temps de roulage de l'aéronef sur la piste est court, car sa vitesse élevée. Cependant, ceci se traduit par une décélération d'autant plus forte. A cet effet, les moyens de calcul de la consigne de décélération peuvent être pilotés ou programmés de façon à établir le temps et la valeur de décélération comme un compromis entre les impératifs de confort des passagers, et les exigences de réduction du temps d'occupation de la piste. Les valeurs dépendent également de la bretelle de sortie choisie.

Il est possible par exemple de privilégier des décélérations tardives mais fortes lorsqu'un aéroport se trouve très engorgé, et de retenir des consignes plus douces et confortables en dehors des situations d'affluence.

La figure 4, décrite ci-après, indique, sous forme de blocs, les principaux éléments d'un équipement de freinage et illustre une mise en oeuvre particulière de l'invention.

La référence 100 désigne, de façon commune, l'aéronef et des moyens de saisie de paramètres dynamiques de vitesse et de position dont il est équipé. Les moyens de saisie sont capables d'établir continûment, en particulier la position actuelle et la vitesse actuelle X et V, mentionnées précédemment.

Ces paramètres sont transmis à une unité de calcul 102 à réseau de neurones. Il s'agit, par exemple, d'un réseau de neurones classique composé de trois couches de cellules fonctionnant selon un procédé d'apprentissage par rétro-propagation de gradient.

Le réseau de neurones a pour fonction d'établir les consignes de décélération ainsi que les instants de modification de ces consignes. Il peut aussi avoir d'autres fonctions complémentaires. Par exemple, dans la phase d'approche, avant l'atterrissage, il peut être utilisé comme un outil de prédiction pour déterminer les bretelles de sortie de la piste d'atterrissage susceptibles d'être atteintes en fonction des conditions de vol de l'aéronef (centrage, masse, etc.), des conditions météorologiques, et éventuellement de l'état de la piste d'atterrissage. La transmission de ces paramètres au réseau de neurones est indiquée sur la figure 4 de façon simplifiée par une flèche.

Les consignes de décélération élaborées par le calculateur 102 sont transmises à un système de freinage 104, qui, dans l'exemple décrit, agit sur les roues du train d'atterrissage principal de l'aéronef. Plus précisément, les consignes de décélération sont transmises au système de freinage par l'intermédiaire d'un dispositif anti-patinage destiné à éviter tout blocage des roues. Un tel dispositif anti-patinage est en soi connu est n'est donc pas décrit en détail ici.

Le système de freinage exerce finalement sur les roues un couple de freinage $\Gamma$ tel qu'examiné précédemment en relation avec la figure 2.

Une flèche $F_X$ indique l'action du freinage des roues sur l'aéronef et notamment sur les paramètres de vitesse et de position. Une flèche $F_N$, en revanche, indique l'action dynamique de l'avion sur les roues (« ground spoilers » (aérofreins), comportement aérodynamique etc.)

Un premier rétrocontrôle peut être effectué entre les roues 108 du train d'atterrissage et le système de freinage 106, en corrigeant le couple de freinage en fonction de données de la vitesse de rotation des roues et de la variation de la vitesse de rotation des roues ($\Omega$, $d\Omega/dt$).

Un deuxième rétrocontrôle peut être effectué entre le système de saisie des paramètres de roulage de l'aéronef et le dispositif anti-patinage 104. Dans ce cas des données de vitesse et d'accélération (V, dV/dt) sont transmises au dispositif anti-patinage.

Enfin, le principal rétrocontrôle peut être effectué entre les systèmes de saisie des paramètres de roulage de l'aéronef et le calculateur à réseau de neurones 102. A tout instant les nouvelles valeurs actuelles de la position et de la vitesse permettent de vérifier par estimation si la vitesse finale peut effectivement être atteinte à la hauteur de la bretelle de sortie de piste sélectionnée. Si tel n'est pas le cas une nouvelle consigne de décélération de peut être établie.

Ce rétrocontrôle peut être continu en ajustant continûment la consigne de décélération, tout au moins après le premier instant de modification de la consigne.

## Revendications

1. Dispositif de commande de la décélération d'un aéronef en phase de roulement sur une piste d'atterrissage, comprenant :

   - des moyens de saisie (100) d'une position actuelle de l'aéronef sur la piste,
   - des moyens de saisie (100) d'une vitesse actuelle de l'aéronef sur la piste,

   **caractérisé en ce qu'**il comprend :

   - des moyens de calcul (102) d'un instant ($t_c$) de modification de la consigne de décélération, postérieur à un instant actuel et d'une nouvelle consigne de décélération ($\Gamma c$) à appliquer à partir de cet instant de modification pour atteindre une position finale sur la piste à une vitesse finale souhaitée, recevant des valeurs de position et de vitesse en provenance des moyens de saisie, et tenant compte de cette vitesse finale souhaitée de l'aéronef en cette position finale.

2. Dispositif selon la revendication 1, comprenant des moyens continus de saisie de la position actuelle et de la vitesse actuelle de l'aéronef, et des moyens de calcul continus d'une nouvelle valeur de décélération.

3. Dispositif selon la revendication 1, dans lequel les moyens de saisie de la position actuelle comprennent un système de positionnement du type GPS (global positioning system, système de localisation par satellites).

4. Dispositif selon la revendication 1, dans lequel les moyens de saisie de la vitesse actuelle comportent un système de mesure de vitesse propre de l'aéronef du type IRS (internal reference system, système référentiel interne).

5. Dispositif selon la revendication 1, dans lequel les moyens de calcul (102) comportent un calculateur à réseau de neurones.

6. Equipement de freinage d'un aéronef équipé d'un dispositif de commande selon la revendication 1.

7. Equipement de freinage selon la revendication 6, comprenant un dispositif anti-patinage (104) connecté entre les moyens de calcul (102) et un système (106) de freinage des roues de l'aéronef.

8. Procédé de commande de la décélération d'un aéronef engagé sur une piste d'atterrissage, entre au moins une position actuelle de l'aéronef occupée à un instant actuel, à laquelle celui-ci présente une vitesse actuelle, et une position finale à laquelle l'aéronef doit présenter une vitesse finale déterminée,

   **caractérisé en ce que** l'on détermine en fonction de la position actuelle, de la vitesse actuelle et de la vitesse finale, un instant de modification de la valeur de décélération, postérieur à l'instant actuel, et une nouvelle consigne de décélération appliquée à partir dudit instant de modification de la consigne, pour atteindre la position finale avec la vitesse déterminée.

9. Procédé selon la revendication 8, dans lequel on mesure continûment la position et la vitesse actuelle de l'aéronef, et dans lequel on établit continûment une nouvelle valeur de décélération.

10. Procédé selon la revendication 9, dans lequel on établit en outre un instant de modification de la décélération, lorsque la consigne de décélération n'est pas encore appliquée.

## Patentansprüche

1. Vorrichtung zur Steuerung der Verzögerung eines Luftfahrzeugs in der Rollphase auf einer Landebahn, umfassend:

   - Mittel (100) zum Erfassen einer aktuellen Position des Luftfahrzeugs auf der Bahn,
   - Mittel (100) zum Erfassen einer aktuellen Geschwindigkeit des Luftfahrzeugs auf der Bahn,

   **dadurch gekennzeichnet, dass** sie umfasst:

   - Mittel (102) zum Berechnen eines Zeitpunkts ($t_c$) einer Veränderung des Verzögerungseinstellwerts nach einem aktuellen Zeitpunkt sowie eines neuen Verzögerungseinstellwerts ($\Gamma c$), der ab diesem Veränderungszeitpunkt anzuwenden ist, um eine Endposition auf der Bahn mit einer gewünschten Endgeschwindigkeit zu erreichen, welche Mittel Positions- und Geschwindigkeitswerte von den Erfassungsmitteln empfangen und diese gewünschte Endgeschwindigkeit des Luftfahrzeugs in dieser Endposition berücksichtigen.

2. Vorrichtung nach Anspruch 1, umfassend Mittel zum kontinuierlichen Erfassen der aktuellen Position und der aktuellen Geschwindigkeit des Luftfahrzeugs sowie Mittel zum kontinuierlichen Berechnen eines neuen Verzögerungswerts.

3. Vorrichtung nach Anspruch 1, bei der die Mittel zum Erfassen der aktuellen Position ein Positionssystem vom Typ GPS umfassen (Global Positioning System, System zur Lokalisierung per Satellit).

4. Vorrichtung nach Anspruch 1, bei der die Mittel zum Erfassen der aktuellen Geschwindigkeit ein System zur Messung der Eigengeschwindigkeit des Luftfahrzeugs vom Typ IRS umfassen (Internal Reference System, internes Referenzsystem).

5. Vorrichtung nach Anspruch 1, bei der die Rechenmittel (102) einen Neuronales-Netzwerk-Rechner umfassen.

6. Bremsgerät für ein Luftfahrzeug, das mit einer Steuervorrichtung nach Anspruch 1 ausgestattet ist.

7. Bremsgerät nach Anspruch 6, umfassend eine Antischlupfvorrichtung (104), die zwischen den Rechenmitteln (102) und einem System (106) zum Bremsen der Luftfahrzeugreifen angeschlossen ist.

8. Verfahren zur Steuerung der Verzögerung eines Luftfahrzeugs auf einer Landebahn zwischen wenigstens einer zu einem aktuellen Zeitpunkt eingenommenen aktuellen Position des Luftfahrzeugs, an der dieses eine aktuelle Geschwindigkeit aufweist, und einer Endposition, an der das Luftfahrzeug eine bestimmte Endgeschwindigkeit aufweisen muss, **dadurch gekennzeichnet, dass** man als Funktion der aktuellen Position, der aktuellen Geschwindigkeit sowie der Endgeschwindigkeit einen Zeitpunkt zur Veränderung des Verzögerungswerts nach dem momentanen Zeitpunkt bestimmt, sowie einen neuen Verzögerungseinstellwert, der ab dem Zeitpunkt der Veränderung des Einstellwerts angewandt wird, um die Endposition mit der bestimmten Geschwindigkeit zu erreichen.

9. Verfahren nach Anspruch 8, bei dem man kontinuierlich die Position und die aktuelle Geschwindigkeit des Luftfahrzeugs misst, und bei dem man kontinuierlich einen neuen Verzögerungswert ermittelt.

10. Verfahren nach Anspruch 9, bei dem man ferner einen Zeitpunkt zur Veränderung der Verzögerung ermittelt, wenn der Verzögerungseinstellwert noch nicht angewandt wird.

## Claims

1. System to control the deceleration of an aircraft during the taxiing phase on a landing strip, the system comprising:

   - acquisition means (100) of the current position of the aircraft on the strip,
   - acquisition means (100) of the current speed of the aircraft on the strip,
   - means (102) for calculating a deceleration set-point modification time ($t_c$) subsequent to a present time and a new deceleration set-point ($\Gamma c$) to be applied as from said modification time in order to reach a final position on the strip at the desired final speed, receiving position and speed values from the acquisition means, and whilst taking account of said final desired speed of the aircraft at said final position.

2. System according to claim 1, comprising continuous acquisition means of the current position and current speed of the aircraft, and continuous calculation means of a new deceleration value.

3. System according to claim 1, wherein the current position acquisition means comprise a GPS (global positioning system) type system.

4. System according to claim 1, wherein the current speed acquisition means comprise an IRS (internal reference system) type speed measurement system specific to the aircraft.

5. System according to claim 1, wherein the calculation means (102) comprise a neural network computer.

6. Braking equipment for an aircraft equipped with a control system according to claim 1.

7. Braking equipment according to claim 6, comprising an anti-blocking system (104) connected between the calculation means (102) and a wheel braking system (106) on the aircraft.

8. Method to control the deceleration of an aircraft running on a landing strip, between at least a current position of the aircraft occupied at a current time, at which said aircraft has a current speed, and a final position at which the aircraft must have a determined final speed, wherein a deceleration set-point modification time, after the current time, and a new deceleration set-point applied from said set-point modification time, are determined as a function of the current position, the current speed and the final speed, in order to reach the final position at the determined speed.

9. Method according to claim 8, wherein the current position and speed of the aircraft are measured continuously, and wherein a new deceleration value is defined continuously.

10. Method according to claim 9, wherein a deceleration modification time is also defined when the deceleration set-point is not yet applied.

FIG. 1

14  10  16a  16b

L

X  X final
V  V final

18a  18b

EP 1 349 779 B1

FIG. 2

FIG. 3

FIG. 4